# EUROPÄISCHE PATENTSCHRIFT

(11) **EP 0 733 266 B1**
(45) Veröffentlichungstag und Bekanntmachung des Hinweises auf die Patenterteilung: **06.05.1998**
(21) Anmeldenummer: 94911103.3
(22) Anmeldetag: 05.04.1994
(51) Int. Cl.: H01J 65/00, H05B 41/29

(54) **VERFAHREN ZUM BETREIBEN EINER INKOHÄRENT EMITTIERENDEN STRAHLUNGSQUELLE**
PROCESS FOR OPERATING AN INCOHERENTLY EMITTING RADIATION SOURCE
PROCEDE PERMETTANT DE FAIRE FONCTIONNER UNE SOURCE DE RAYONNENENT A EMISSION INCOHERENTE

(30) Priorität: 05.04.1993 DE 4311197
(43) Veröffentlichungstag der Anmeldung: 25.09.1996
(73) Patentinhaber: Patent-Treuhand-Gesellschaft für elektrische Glühlampen mbH, 81543 München (DE)
(72) Erfinder: VOLLKOMMER, Frank, D-82131 Gauting (DE); HITZSCHKE, Lothar, Dr., D-81739 München (DE)
(86) Internationale Anmeldenummer: DE9400380
(87) Internationale Veröffentlichungsnummer: WO9423442

(56) Entgegenhaltungen:
- EP-A- 0 131 965
- EP-A- 0 270 004
- EP-A- 0 302 748
- DE-A- 4 203 594
- DE-A- 4 209 763

## Beschreibung

Die Erfindung betrifft ein Verfahren zum Betreiben einer inkohärent emittierenden Strahlungsquelle gemäß dem Oberbegriff des Anspruchs 1. Als Strahlungserzeugungsmechanismus dient eine Entladung, die innerhalb eines Entladungsgefäßes erzeugt wird, wobei zwischen mindestens einer Elektrode und der Entladung eine dielektrische Schicht angeordnet ist, weshalb dieser Entladungstyp auch stille oder dielektrisch behinderte Entladung oder Barrierenentladung genannt wird. Unter inkohärent emittierenden Strahlungsquellen sind UV- und IR-Strahler sowie Entladungslampen, die insbesondere sichtbares Licht abstrahlen, zu verstehen. Die Erfindung eignet sich sowohl für Niederdruck- als auch für Hochdruck-Gasfüllungen und alle Gasdrücke, die innerhalb des Bereiches zwischen Nieder- und Hochdruck liegen.

Die Anregung solcher Entladungen erfolgt üblicherweise mit Hilfe einer Wechselspannung, wie dies beispielsweise in den Offenlegungsschriften DE-A-40 22 279 und DE-A-42 03 594 und in der Patentschrift US-A-5 117 160 offenbart ist. Die Anregungsfrequenz wird dort im Bereich zwischen der Frequenz des technischen Wechselstroms und einigen MHz (DE-A-40 22 279) bzw. zwischen 20 und 100 kHz (US-A-5 117 160) gewählt.

Der Nachteil dieser Betriebsart ist, daß die gewünschte Strahlungsausbeuten bei technisch relevanten Leistungsdichten relativ gering sind. Typische UV-Wirkungsgrade betragen zwischen 10 % bei Flächenleistungsdichten von 1 kW/m² und 15 % bei 10 W/m², siehe 3. Tagung des Arbeitskreises UV und IR am Lichttechnischen Institut der Universität Karlsruhe, vom 07.10.1992 und "Dielectric Barrier Discharges: An Unusual Light Source", M. Neiger, LTI, Universität Karlsruhe, 6th International Symposium on The Science And Technology of Light Sources, Budapest, 1992.

Die EP-A-0 302 748 beschreibt eine lampenartige Anzeigeneinheit mit einer elektrisch isolierten Elektrode, die mittels dielektrisch behinderter Entladung betrieben wird. Zum Zünden der Entladung wird zwischen den Lampenelektroden eine hochfrequente Spannung mit Spitzenwerten in der Größenordnung von 300 V bis 6 kV erzeugt. Dazu sind die Elektroden der lampenartigen Anzeigeneinheit mit der Sekundärwicklung eines Transformators verbunden. Die Primärwicklung des Transformators ist über einen Schalttransistor mit einer Stromversorgung verbunden. Die Basis des Schalttransistors ist von einem Pulsgenerator angesteuert, der repetitive unipolare Rechteckpulse mit einer Wiederholfrequenz zwischen 0,5 kHz und 20kHz liefert. Die Puls- und Pausenzeit der Rechteckspannung sind nicht spezifiziert.

Der Erfindung liegt die Aufgabe zugrunde, die Effizienz der gewünschten Strahlungserzeugung wesentlich zu verbessern.

Diese Aufgabe wird erfindungsgemäß durch die kennzeichnenden Merkmale des Anspruchs 1 gelöst. Weitere vorteilhafte Ausgestaltungen der Erfindung sind in den Unteransprüchen erläutert.

Der Grundgedanke der Erfindung beruht darauf, daß eine dielektrisch behinderte Entladung repetitiv gepulst betrieben wird, so daß die aufeinander folgenden elektrischen Energieeinkopplungen selbst bei hohen Leistungsdichten in der Einzelentladung definiert durch Zeitspannen T₀ₙ - im folgenden als "Totzeiten" bezeichnet - unterbrochen sind. Die Dauern der einzelnen Zeitspannen ergeben sich aus den Forderungen, daß die Einkopplung der Energie oder genauer gesagt, die der Wirkleistung, im wesentlichen beendet wird, sobald die Einkopplung weiterer elektrischer Energie eine weniger effiziente Umwandlung in die gewünschte Strahlung zur Folge hat, bzw. daß die "Totzeit" beendet wird, sobald die Gasfüllung wieder soweit relaxiert ist, um erneut zur effizienten Emission der gewünschten Strahlung angeregt werden zu können, so daß im zeitlichen Mittel die Strahlungseffizienz optimiert wird. Auf diese Weise lassen sich Wirkungsgrade von beispielsweise 65 % und mehr für die Konversion elektrischer Energie in UV-Strahlung erzielen, was eine vielfache Steigerung gegenüber der konventionell betriebenen, dielektrisch behinderten Entladung darstellt.

Im Normalfall handelt es sich dabei um eine Folge von gleichen oder lediglich polaritätswechselnden Spannungspulsen, wobei die Gesamtzahl n der Spannungspulse prinzipiell nicht beschränkt ist. Es ist jedoch für Spezialfälle auch eine Folge von regelmäßig sich verändernden Spannungspulsen verwendbar. Schließlich kann die Pulsfolge auch völlig unregelmäßig sein (z.B. bei Effektbeleuchtung, wobei mehrere Pulse so zu einem Bündel zusammengefaßt werden, daß ein für das menschliche Auge erkennbarer Lichteffekt entsteht).

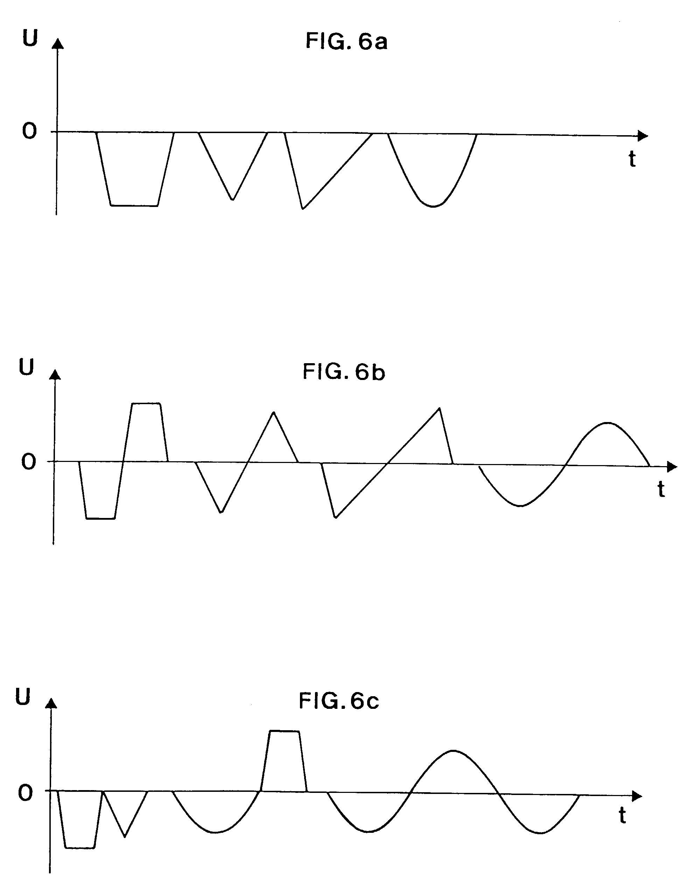

Während der Pulszeiten T_{Pn} wird zwischen den Elektroden ein Spannungspuls U_{Pn}(t) angelegt, wobei Wirkleistung eingekoppelt wird. Sein zeitlicher Verlauf ist nicht prinzipiell festgelegt, er kann aus verschiedenen Formen ausgewählt werden, wie z.B.:
a) unipolare Formen, d.h. die Spannungen wechseln ihre Vorzeichen während der Pulszeiten T_{Pn} nicht. Hierunter fallen u.a. trapezförmige, dreieckförmige, bogenförmig gekrümmte Spannungspulse, insbesondere parabelförmige Spannungspulse und sinusförmige Halbwellen , wobei sowohl positive als auch negative Werte geeignet sind (siehe Fig. 6a, in der beispielhaft nur negative Werte dargestellt sind),
b) bipolare Formen, d.h. die Spannungen wechseln ihre Vorzeichen während der Pulszeiten T_{Pn}, wobei die Formen sowohl mit einem positiven als auch mit einem negativen Vorzeichen beginnen können. Beispiele hierfür sind beide Halbwellen eines Sinus, zwei unmittelbar aufeinanderfolgende Dreiecke entgegengesetzten Vorzeichens, zwei unmittelbar aufeinander folgende "Rechtecke" oder Trapeze entgegengesetzten Vorzeichens wobei die Flanken unterschiedliche Anstiegs- bzw. Abfallzeiten haben können (siehe Fig. 6b), sowie
c) die zeitliche Folge von einigen (bevorzugt zwei oder drei) Elementen aus a und b, wobei die Spannungen U_{Pn}(t) unterschiedlichste Werte annehmen können, insbesondere kurzzeitig auch den Wert 0, so daß einzelne Elemente auch durch Zeitbereiche in denen die Spannung den Wert 0 hat getrennt sein können (siehe Fig. 6c). Insbesondere können sich die einzelnen Elemente wiederholen.
In den Figuren 6a-c ist exemplarisch nur eine Auswahl möglicher Spannungsformen dargestellt. Darüber hinaus ist eine große Zahl weiterer Formen denkbar. Insbesondere haben elektrische Signale in der Praxis immer endliche Anstiegs- und Abfallzeiten, Über- und Unterschwinger, was in den Figuren 6a-c nicht dargestellt ist.

An die Spannungsform während der Totzeiten T₀ₙ wird die Forderung gestellt, daß die Spannung U₀ₙ(t) so gewählt ist, daß im wesentlichen keine Wirkleistungseinkopplung erfolgt. Entsprechend niedrige Spannungswerte, die kleiner als die Wiederzündspannung sind, können längere Zeiten andauern, ggf. die gesamte Totzeit T₀ₙ. Dabei wird nicht ausgeschlossen, daß kurzzeitig, d.h. wesentlich kürzer als die Pulszeit T_{Pn}, auch Spannungsspitzen während der Totzeit auftreten.

Typische Absolutwerte für U_{Pn} sind einige kV. U₀ₙ liegt bevorzugt in der Nähe von 0 V. Die Werte von T_{Pn} und T₀ₙ liegen typisch im µs-Bereich, wobei normalerweise T_{Pn} deutlich kürzer als T₀ₙ ist.

Das erfindungsgemäße Betriebsregime für die Entladung wird im wesentlichen durch eine geeignete Wahl der Anregungsparameter T_{Pn}, T₀ₙ und der Spannungsamplitude U_{Pn} erzielt, wobei diese Größen für einen besonders effizienten Betrieb geeignet aufeinander abgestimmt werden. Daneben spielt auch die Pulsform eine Rolle.

Im Einzelfall hängen die für die drei Anregungsparameter T_{Pn}, T₀ₙ und U_{Pn}(t) zu wählenden Werte von der Entladungsgeometrie, der Art der Gasfüllung und dem Gasdruck sowie der Elektrodenkonfiguration und von der Art und Dicke der dielektrischen Schicht ab. Befindet sich die Entladung im erfindungsgemäßen Betriebsregime, nimmt die Ausbeute der gewünschten Strahlung ein Optimum an.

Die Raten der für vorgegebene Lampenfüllungen in der Entladung stattfindenden Stoßprozesse und folglich auch die der Strahlungserzeugung werden im wesentlichen durch die Elektronendichte nₑ und die Energieverteilung der Elektronen bestimmt. Das erfindungsgemäße Betriebsverfahren ermöglicht es, diese zeitabhängigen Größen mittels entsprechender Wahl von T_{Pn}, T₀ₙ und der Spannungsamplitude U_{Pn} bzw. der Pulsform für die Strahlungserzeugung optimal einzustellen.

Im Vergleich zum Wechselspannungsbetrieb benützt die Erfindung bewußt einen zusätzlichen Parameter, die "Totzeit" T₀, mit dem erstmals selbst bei hohen Leistungsdichten gezielt Einfluß auf den zeitlichen und räumlichen Verlauf der Ladungsträgerdichte sowie die Energieverteilungsfunktion genommen werden kann. Beim Stand der Technik, bei dem Wechselspannung verwendet wird, ist eine gezielte Einflußnahme auf diese Größen nur sehr begrenzt über die Frequenz möglich. Erst die vorliegende Erfindung ermöglicht es, den Wirkungsgrad von dielektrisch behinderten Entladungen mit technisch interessanten Leistungsdichten gezielt soweit zu steigern, daß Alternativen zu konventionellen Strahlungsquellen gegeben sind.

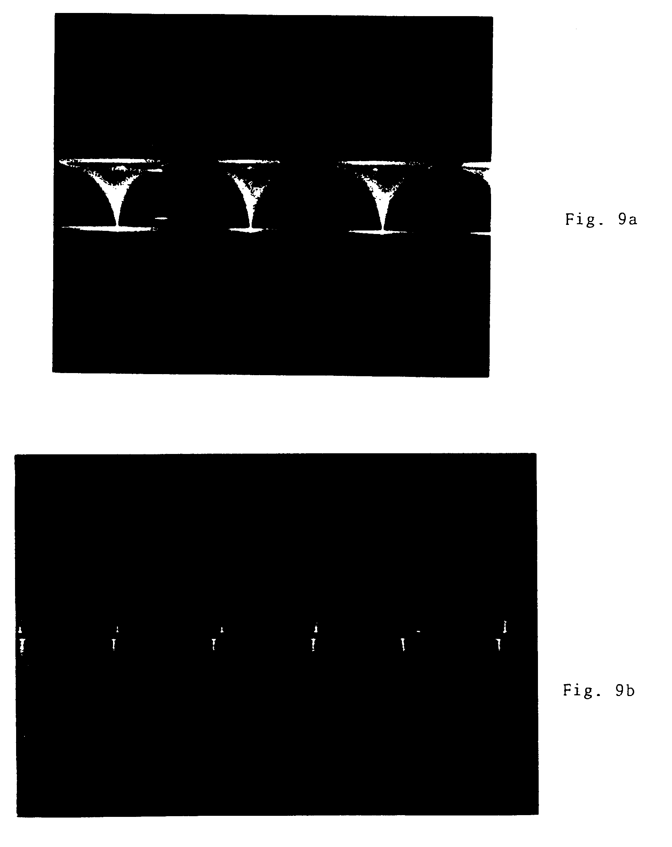

Das erfindungsgemäße Betriebsregime läßt sich daran erkennen, daß zwischen den Elektroden statt unterschiedlich ausgebildeter, typisch faden- oder schraubenförmiger Entladungsstrukturen eine Vielzahl gleichartiger, in Draufsicht, also senkrecht zur Entladung, delta- ähnliche Entladungsstrukturen auftreten, die sich jeweils in Richtung (momentaner) Anode verbreitern. Da diese Entladungsstrukturen bevorzugt mit Wiederholfrequenzen im kHz-Bereich erzeugt werden, nimmt der Betrachter nur eine der zeitlichen Auflösung des menschlichen Auges entsprechende "mittlere" Entladungsstruktur wahr, ähnlich wie sie die fotografische Darstellung in Figur 9a zeigt. Im Fall wechselnder Polarität der Spannungspulse einer zweiseitig dielektrisch behinderten Entladung erscheint visuell eine Überlagerung zweier deltaförmiger Strukturen. Stehen sich beispielsweise zwei längliche Elektroden, die ein oder zweiseitig dielektrisch behindert sein können, parallel gegenüber, so erscheinen die einzelnen Entladungsstrukturen transversal zu den länglichen Elektroden orientiert, nebeneinander aufgereiht (s. Figuren 9a,b). Bei geeigneter Wahl der Parameter, beispielsweise bei geeignet niedrigem Druck, läßt sich erreichen, daß die Aneinanderreihung der Einzelstrukturen zu einer einzigen, diffus erscheinenden Entladung führt. Die Entladungsstrukturen können z.B. in transparenten Lampenkolben direkt beobachtet werden.

Ein bemerkenswerter Vorteil der Erfindung liegt in der besonderen Stabilität der einzelnen Entladungsstruktur gegenüber einer Veränderung der in das Entladungsgefäß eingekoppelten elektrischen Leistungsdichte. Wird die Amplitude U_{Pn} der Spannungspulse erhöht, ändern die einzelnen Entladungsstrukturen ihre prinzipielle Form nicht. Es entstehen nach Überschreiten eines Schwellwertes aus einer der Entladungsstrukturen weitere ähnliche Strukturen. Eine Erhöhung der eingekoppelten elektrischen Leistung durch Erhöhen der Amplitude der Spannungspulse führt also im wesentlichen zu einer Erhöhung der **Anzahl** der beschriebenen einzelnen Entladungsstrukturen, wobei die **Qualität** dieser Strukturen, insbesondere ihr äußeres Erscheinungsbild und ihre effizienten Strahlungseigenschaften, unverändert bleibt.

Dieses Verhalten ermöglicht es erstmals, die in ein vorgegebenes Entladungsvolumen einkoppelbare elektrische Leistung sinnvoll weiter zu steigern, indem mehr als zwei Elektroden verwendet werden, die das Entladungsvolumen optimal ausnutzen. Beispielsweise können einer zentrisch innerhalb des Entladungsgefäßes angeordneten Innenelektrode mehrere Außenelektroden symmetrisch auf der Außenwand des Entladungsgefäßes angeordnet gegenübergestellt werden. Mit der Anzahl der Außenelektroden läßt sich somit die aus dem Volumen des Entladungsgefäßes maximal extrahierbare Strahlungsleistung erhöhen, da die Entladungsstrukturen, von der zentrischen Innenelektrode ausgehend, in die Richtungen der jeweiligen Außenelektroden brennen und somit bei entsprechender Leistungseinkopplung das Volumen des Entladungsgefäßes zunehmend ausfüllen.

Neben dieser Möglichkeit liegt bei achsparalleler Anordnung der Elektroden ein weiterer Vorteil darin, daß sich die elektrische Leistung und der Lichtstrom proportional zur Länge des Entladungsgefäßes ändert. Da in diesem Fall das elektrische Feld im wesentlichen senkrecht zur Längsachse des Entladungsgefäßes steht, kann die Länge des Entladungsgefäßes nahezu beliebig vergrößert werden, ohne daß die erforderliche Zündspannung, wie beispielsweise bei einer konventionellen röhrenförmigen Entladungslampe üblich, entsprechend ansteigt. Für eine Leistungsangabe muß somit bei dieser Art von Entladung sowohl das Volumen des Entladungsgefäßes als auch die Anzahl der Elektroden bzw. der Ebenen, in denen die Entladungsstrukturen brennen, berücksichtigt werden. Bei einer röhrenförmigen Lampe mit 50 cm Länge, 24 mm Durchmesser und Xenon als Füllgas können pro "Entladungsebene" typisch 15 W elektrische Wirkleistung eingekoppelt werden.

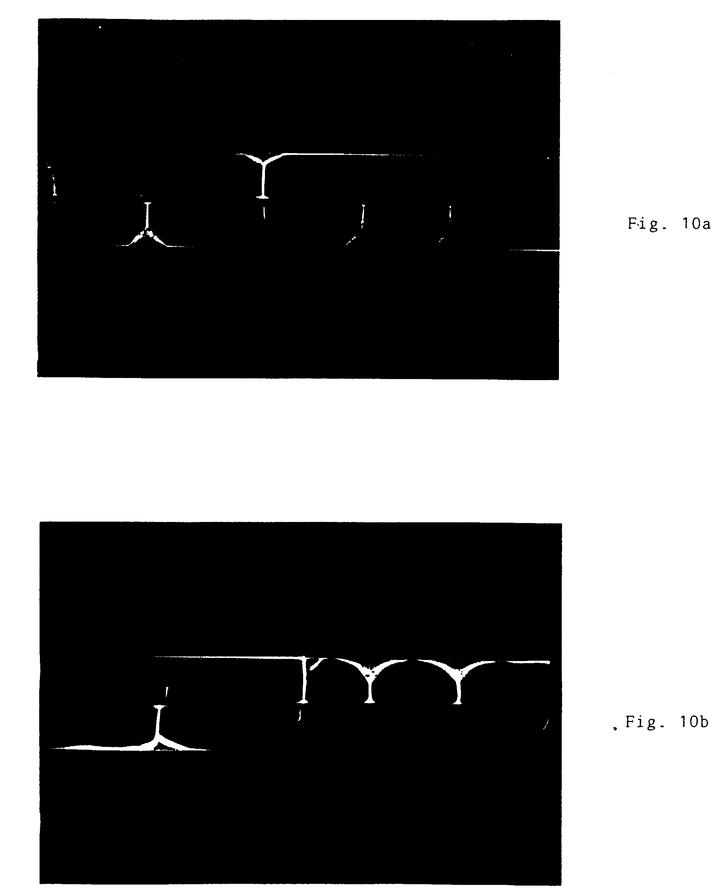

Werden T_{Pn} und/oder T₀ₙ und/oder U_{Pn}(t) nicht geeignet gewählt, so treten stochastisch ein oder mehrere zum Gasraum scharf abgegrenzte, dünne und hell leuchtende "Entladungsfäden" auf. Sie können sich auf Kosten der erfindungsgemäßen Entladungsstrukturen über weite Bereiche innerhalb des Entladungsgefäßes erstrecken, wie aus der fotografischen Darstellung in Figur 10b zu ersehen ist. Diese "Entladungsfäden" unterscheiden sich somit visuell sowohl in ihrer Form als auch in ihrer spektralen Strahlungsverteilung deutlich von der Entladungsform des erfindungsgemäßen Betriebsregimes und sind unerwünscht, da sie den Stromtransport innerhalb kleiner Querschnittsflächen konzentrieren, wodurch sich erhöhte Ladungsträgerdichten verbunden unter anderem mit erhöhten Quenchraten ergeben und folglich die Effizienz der Erzeugung der gewünschten Strahlung abnimmt.

Aus dieser Phänomenologie läßt sich eine allgemeine Vorschrift zum Erreichen der für die erfindungsgemäße Betriebsweise geeigneten Werte für U_{Pn}(t),T_{Pn} und T₀ₙ ableiten. Nach dem Zünden der Entladung ist U_{Pn}(t),T_{Pn} und T₀ₙ so zu wählen, daß die gewünschte elektrische Leistung im erfindungsgemäßen Betriebsregime eingekoppelt wird, d.h. die oben beschriebenen Entladungsstrukturen sichtbar sind. Überraschenderweise hat sich nämlich herausgestellt, daß gerade beim Vorhandensein dieser Entladungsstrukturen die Elektronendichte sowie die Energieverteilungsfunktion der Elektronen Werte annehmen, die die Verlustprozesse minimieren.

Jeder der oben genannten drei Betriebsparameter beeinflußt sowohl die zeitliche und räumliche Struktur der Ladungsträgerdichten als auch die Energieverteilungsfunktion der Elektronen. Da deren jeweilige Einflüsse auf die genannten Größen unterschiedlich stark sind, legt die Wahl eines Parameters einen groben Wertebereich der restlichen Parameter zur Erzielung des effizienten Entladungsmodus fest.

Typische Werte für die Amplitude U_{Pn} der Spannungspulse liegen im Bereich zwischen ca. 0,01 und 2 V pro cm Schlagweite und Pascal Fülldruck, die Pulszeiten T_{Pn} und die Totzeiten T₀ₙ liegen in der Größenordnung von ca. 1 ns bis 50 µs bzw. von ca. 500 ns bis 1 ms. Für die erfindungsgemäße Betriebsweise liegt der Betriebsdruck vorteilhaft zwischen 100 Pa und 3 MPa. Im Mitteldruckbereich (z.B. 10 kPa) bedeutet dies bevorzugt eine Amplituden U_{Pn} der Spannungspulse im Bereich zwischen 100 V und 20 kV pro cm Schlagweite. Im Hochdruckbereich (z.B. 1 MPa) bedeutet dies bevorzugt eine Amplitude U_{Pn} der Spannungspulse im Bereich zwischen 10 kV und 200 kV pro cm Schlagweite.

Aus Gründen der elektrischen Sicherheit werden die Außenelektroden bevorzugt mit Massepotential verbunden und die Innenelektrode mit der Hochspannung. Dadurch ist ein weitgehender Berührungsschutz spannungsführender Teile möglich. Das Entladungsgefäß, inklusive Elektroden, kann auch innerhalb eines Hüllkolbens angeordnet sein. Dadurch ist ein Berührungsschutz auch dann gegeben, wenn die Außenelektrode(n) nicht mit Massepotential verbunden ist (sind). Als leitendes Elektrodenmaterial können alle stromtragfähigen Materialien, also auch Elektrolyte verwendet werden.

Für die einseitig dielektrisch behinderte Entladung - d.h. mindestens eine dielektrisch unbehinderte Elektrode befindet sich innerhalb des Entladungsgefäßes, im Gasraum - ist darüber hinaus zwingend, daß diese Innenelektrode zu Beginn der Pulszeit eine negative Polarität gegenüber der dielektrisch behinderten Elektrode (innerhalb oder außerhalb des Entladungsgefäßes) erhält (von möglichen positiven nadelförmigen und in Hinblick auf die Leistungseinkopplung unwesentlichen Vorpulsen abgesehen). Danach kann die Polarität während der Pulszeit wechseln.

Die erfindungsgemäße Betriebsweise ist auch für zweiseitig dielektrisch behinderte Entladungen (sämtliche Elektroden sind von der Entladung durch ein Dielektrikum getrennt, wobei dieses auch das Entladungsgefäß selbst sein kann) geeignet, ohne daß diese prinzipiell geändert werden müßte oder ihre vorteilhafte Wirkung verlorenginge. Im Falle, daß alle Elektroden dielektrisch behindert sind, spielt die zeitliche Reihenfolge der Polarität und sie selbst keine Rolle.

Prinzipiell können sich die Elektroden sowohl sämtlich außerhalb des Gasraums, z.B. auf der äußeren Oberfläche des Entladungsgefäßes, oder eine gewisse Anzahl von ihnen außerhalb und eine gewisse Anzahl innerhalb, wie auch alle innerhalb des Entladungsgefäßes, im Gasraum, befinden. Im letzten Fall ist es notwendig, daß mindestens eine davon mit einem Dielektrikum überzogen ist und dabei eine bezüglich der restlichen Elektroden gegensätzliche Polarität erhält.

Insbesondere für den Fall, daß sich aggressive Medien innerhalb des Entladungsgefäßes befinden, ist es vorteilhaft, wenn keine der Elektroden direkten Kontakt mit dem Medium hat, da so eine Korrosion der Innenelektrode(n) wirkungsvoll verhindert werden kann. Das kann erreicht werden, indem entweder alle Elektroden außerhalb des Entladungsgefäßes angeordnet sind oder die im Entladungsgefäß befindlichen mit einer dielektrischen Schicht umgeben sind.

Bei der Erfindung wird auf großflächige Elektroden verzichtet.
Die Abschattung der Strahlung durch die Elektroden ist sehr gering. Für die dielektrisch behinderte Elektroden ist das Verhältnis der mit dem Dielektrikum in Kontakt stehender Elektrodenfläche zum Umfang dieser Elektrodenfläche vorzugsweise möglichst klein. In einer besonders bevorzugten Ausführungsform sind die dielektrisch behinderte Elektroden als schmale auf die Außenwand des Entladungsgefäß aufgebrachte Streifen ausgeführt. Geeignet sind auch gitterartige Außenelektroden, beispielsweise Gitternetze, Lochbleche o.ä.. Um das Volumen des Entladungsgefäßes optimal nutzen zu können, weist die Innenelektrode vorzugsweise eine in Richtung der Entladung möglichst geringe Ausdehnung auf. In einer besonders bevorzugten Ausführungsform ist die Innenelektrode als Stab ausgeführt.

Die ein- bzw. zweiseitig behinderte Entladung erlaubt die Realisierung einer Vielzahl möglicher Entladungsgefäßgeometrien, insbesondere auch all jene, die bei konventionell betriebenen dielektrisch behinderten Entladungen beispielsweise in EP-A-0 385 205, EP-A-0 312 732, EP-A-0 482 230, EP-A-0 363 832, EP-A-0 458 140, EP-A-0 449 018 und EP-A-0 489 184 offenbart sind.

In Entladungsgefäßen mit kleinem Querschnitten sollten bevorzugt die Elektroden so angeordnet werden, daß der Abstand zwischen den entsprechenden Anoden und Kathoden möglichst groß wird. Zum Beispiel wird für zylindrische Entladungsgefäße mit kleinem Querschnitt die Innenelektrode bevorzugt azentrisch innerhalb des Entladungsgefäßes angeordnet und die Außenelektrode diametral gegenüberliegend auf der Außenwand fixiert. Die Verlängerung des Entladungsweges kann durch Gliederung der Elektroden zusätzlich unterstützt werden. Dazu weisen Innen- und Außenelektrode abwechselnd zwei unterschiedliche Bereiche auf, innerhalb derer die Entladung ansetzt bzw. unterdrückt wird. Die Elektroden werden dann so angeordnet, daß sich jeweils zwei unterschiedliche Bereiche gegenüberstehen. Dadurch werden radiale Entladungsstrukturen unterdrückt. Die Entladung brennt vielmehr schräg zum nächsten benachbarten Bereich der Gegenelektrode. Dies kann beispielsweise dadurch realisiert werden, daß die Elektroden abwechselnd Bereiche mit zusätzlicher dielektrischer Schicht aufweisen.

Bei größeren Querschnitten wird die Innenelektrode bevorzugt zentrisch innerhalb des Entladungsgefäßes angeordnet, wobei vorteilhaft mehrere Außenelektroden auf der Außenwand fixiert sind, symmetrisch über den Umfang verteilt.

Die Form des Entladungsgefäßes ist prinzipiell nicht zwingend vorgegeben. Je nach Anwendungszweck müssen die Gefäßwände aus Materialien bestehen, die für die gewünschte Strahlung - zumindest innerhalb einer Apertur - die notwendige Transparenz aufweisen. Als dielektrische Barrieren eignen sich für die verwendete Hochspannung durchschlagfeste, elektrisch isolierende Materialien (Dielektrika), wie z.B. Borosilikatgläser - beispielsweise DURAN® (Fa. Schott) -, Quarzglas, Al₂O₃, MgF₂, LiF, BaTiO₃, usw. Durch Art und Dicke des Dielektrikums kann die Entladungsstruktur beeinflußt werden. Insbesondere ausreichend dicke Dielektrika mit geeignet niederer relativer Dielektrizitätskonstante sind geeignet die Ausbildung der erfindungsgemäßen Entladungsstrukturen mit vergleichsweise niedrigen Elektronendichten zu unterstützen, d.h. die Ausbildung unerwünschter Entladungsstrukturen mit hohen Elektronendichten und Stromdichten zu vermeiden. Vereinfachend gesagt resultiert dies einerseits daraus, daß der durch eine Verschiebungsstromdichte verursachte lokale Spannungsabfall über dem Dielektrikum proportional zu dessen Dicke und umgekehrt proportional zu dessen Dielektrizitätskonstanten ist. Andererseits wirkt der Spannungsabfall am Dielektrikum einem Anwachsen der Stromdichte entgegen.

Die spektrale Zusammensetzung der Strahlung hängt im wesentlichen von der Gasfüllung ab und kann beispielsweise im sichtbaren, im IR- oder im UV-Bereich liegen. Als Gasfüllung eignen sich prinzipiell alle Füllungen, die für konventionell betriebene dielektrisch behinderte Entladungen verwendet werden können und beispielsweise in den Schriften DE-A-40 22 279, EP-A-0 449 018, EP-A-0 254 111, EP-A-0 324 953 und EP-A-0 312 732. offenbart sind, sowie Füllungen, die bereits in Excimer- bzw. Exciplexlasern verwendet wurden (z.B.: I.S.Lakoba and S.I. Yakovlenko, "Active media of exciplex lasers (review)", Sov. J. Quantum Electron, 10(4), April 1980, pp.389 sowie Ch.K. Rhodes, Ed., "Excimer Lasers", Springer, 1984). Dazu gehören u.a. Edelgase und deren Mischungen, Mischungen von Edelgasen mit Halogenen oder Halogenverbindungen, Metalldämpfe und deren Mischungen, Mischungen von Edelgasen mit Metalldämpfen, Mischungen von Edelgasen mit Metalldämpfen und Halogenen oder Halogenverbindungen, außerdem einzelne oder Kombinationen folgender Elemente, die auch den vorgenannten Füllungen zugesetzt sein können: Wasserstoff, Deuterium, Sauerstoff, Stickstoff, Stickoxide, Kohlenmonoxid, Kohlendioxid, Schwefel, Arsen, Selen und Phosphor. Insbesondere die aufgrund der erfindungsgemäßen Betriebsweise sehr effiziente UV-Erzeugung in Excimer-Entladungen eröffnet das weite Anwendungsfeld der UV-Hochleistungsstrahler, das beispielsweise in der EP-A-0 482 230 erwähnt ist. Dazu gehören unter anderem photochemische Prozesse, wie das Härten von Lacken, das Verändern von Oberflächen, das Entkeimen von Trinkwasser o.ä. und der Abbau von Schadstoffen in der Umwelttechnik durch UV-Strahlung. Insbesondere für letztgenannte Einsatzbereiche kann es vorteilhaft sein, die Entladung in unmittelbare Nähe des zu bestrahlenden Mediums zu bringen, d.h. auf ein hermetisch abgeschlossenes Entladungsgefäß zu verzichten, um eine Abschwächung des kurzwelligen Anteils der Strahlung durch die Gefäßwände zu vermeiden. Insbesondere bei der Erzeugung von UV- bzw. VUV-Strahlung zeigt sich ein weiterer entscheidender Vorteil, der mittels der erfindungsgemäßen Betriebsweise erzielbaren hohen UV-Ausbeuten: im Gegensatz zu UV- bzw. VUV-Strahlern vergleichbarer Strahldichten gemäß dem Stand der Technik kann auf eine Kühlung durch Wasser verzichtet werden. Eine andere bevorzugte Anwendung ist die Beleuchtung, indem die UV-Strahlung mittels geeigneter Leuchtstoffe in den sichtbaren Bereich des elektromagnetischen Spektrums konvertiert wird.

Weitere Vorteile der Erfindung sind: es ist keine äußere Strombegrenzung erforderlich, die Lampe ist dimmbar, der Parallelbetrieb mehrerer Lampen ist an nur einer Spannungsversorgung möglich, und es wird eine hohe Effizienz der Strahlungserzeugung bei gleichzeitig in der Lichttechnik erforderlichen Leistungsdichten erzielt.

In einer bevorzugten Ausführungsform der Erfindung wird das Entladungsgefäß mit einer Leuchtstoffschicht versehen, um das bei der Entladung erzeugte Licht in besonders geeignete Spektralbereiche zu transferieren. Eine Leuchtstoffbeschichtung läßt sich sowohl bei Niederdruck- als auch bei Hochdrucklampen einsetzen. Es können hierbei an sich bekannte Leuchtstoffe bzw. Mischungen verwendet werden. Besonders gut bewährt hat sich für Leuchtstofflampen eine Kombination aus blau, grün und rot emittierenden Leuchtstoffen. Ein geeigneter blauer Leuchtstoff ist insbesondere das mit zweiwertigem Europium aktivierte Bariummagnesiumaluminat (BaMgAl₁₀O₁₇: Eu²⁺). Als Grünkomponente können insbesondere terbium- oder manganaktivierte Leuchtstoffe verwendet werden. Beispiele sind terbiumaktiviertes Yttriumoxidsilikat (Y₂SiO₅:Tb) oder Lanthanphosphat (LaPO₄: Tb) bzw. mit zweiwertigem Mangan aktiviertes Zinksilikat (Zn₂SiO₄: Mn) oder Magnesiumaluminat (MgAl₂O₄: Mn). Vorteilhafte Rotkomponenten finden sich unter den mit dreiwertigem Europium aktivierten Leuchtstoffen, wie z.B. Yttriumoxid (Y₂O₃: Eu³⁺) oder den Boraten des Yttrium und/oder Gadolinium. Im einzelnen handelt es sich dabei um YBO₃: Eu³⁺, GdBO₃: Eu³⁺ und das gemischte Borat (Gd,Y)BO₃: Eu³⁺.

Für Lampen warmer Lichtfarbe kann - entsprechend der bei üblichen Leuchtstofflampen vorbekannten Vorgehensweise - der Anteil der Blaukomponente vermindert oder ggf. ganz weggelassen werden.

Für Lampen mit speziellen Farbwiedergabeeigenschaften eigenen sich Komponenten, die im blaugrünen Spektralbereich emittieren, z.B. Leuchtstoffe die mit zweiwertigem Europium aktiviert sind. Für diese Anwendung ist Strontiumborophosphat Sr₆BP₅O₂₀: Eu²⁺ zu bevorzugen.

Die Erfindung schafft insbesondere einen Durchbruch auf dem Gebiet der Leuchtstofflampen. Erstmals ist es gelungen, bei der Füllung auf Quecksilber zu verzichten und trotzdem innere UV-Wirkungsgrade zu erzielen, die denen von konventionellen Leuchtstofflampen entsprechen. Im Vergleich zu konventionellen Leuchtstofflampen ergeben sich dadurch noch folgende zusätzliche Vorteile. Ein problemloser Kaltstart ist möglich, ohne daß ein Einfluß der Umgebungstemperatur auf den Lichtstrom und ohne daß Kolbenschwärzung auftritt. Ferner sind keine die Lebensdauer begrenzenden Elektroden (z.B. Glühkathoden mit Emitterpaste), keine Schwermetalle und keine radioaktive Bauteile (Glimmzünder) erforderlich. Im Unterschied zu Glühlampen und Entladungslampen mit Glühkathoden wird außerdem die Strahlung ohne nennenswerte Verzögerung emittiert, unmittelbar nach dem Anlegen der Betriebsspannung an die Elektroden (Verzögerung des Leuchtens der reinen Entladung: ca. 10 µs, inklusive Leuchtstoff ca. 6 ms. Im Vergleich dazu beträgt die Ansprechzeit einer Glühlampe im Bereich um ca. 200 ms.). Dies ist insbesondere für einen Einsatz in Lichtzeichenanlagen, Verkehrs- und Signalbeleuchtungen von Vorteil.

Die Erfindung wird im folgenden anhand einiger Ausführungsbeispiele näher erläutert. Es zeigen, stark schematisiert,
- Fig. 1: die teilweise geschnittene Längsansicht einer erfindungsgemäßen Ausführungsform einer Entladungslampe in Stabform, die nach dem neuen Verfahren betrieben werden kann,
- Fig. 2a: den Querschnitt entlang A-A der in Fig. 1 gezeigten Entladungslampe,
- Fig. 2b: den Querschnitt einer weiteren Ausführungsform einer erfindungsgemäßen Entladungslampe,
- Fig. 2c: den Querschnitt einer weiteren Ausführungsform einer erfindungsgemäßen Entladungslampe,
- Fig. 3a: eine schematische Darstellung der erfindungsgemäß bevorzugten Form der Spannung zwischen Kathode und Anode der in Fig. 1 gezeigten einseitig, dielektrisch behinderten Entladungslampe,
- Fig. 3b: eine schematische Darstellung einer Form der Spannung, die nur für den erfindungsgemäßen Betrieb beidseitig, dielektrisch behinderter Entladungslampen verwendet werden kann,
- Fig. 4a: die teilweise geschnittene Draufsicht einer weiteren erfindungsgemäßen Ausführungsform einer Entladungslampe in Form eines Flächenstrahlers, die nach dem neuen Verfahren betrieben werden kann,
- Fig. 4b: den Querschnitt der in Fig. 4a gezeigten Entladungslampe,
- Fig. 5a: die Seitenansicht einer weiteren erfindungsgemäßen Ausführungsform einer Entladungslampe in Form einer konventionellen Lampe mit Edison-Schraubsockel, die nach dem neuen Verfahren betrieben werden kann,
- Fig. 5b: den Querschnitt entlang A-A der in Fig. 5a gezeigten Entladungslampe,
- Fig. 6a: eine schematische Darstellung einiger unipolarer Formen erfindungsgemäßer Spannungspulse U_{P}(t) mit negativen Werten,
- Fig. 6b: eine schematische Darstellung einiger bipolarer Formen erfindungsgemäßer Spannungspulse U_{P}(t),
- Fig. 6c: eine schematische Darstellung einiger erfindungsgemäßer Formen von Spannungspulsen U_{P}(t), erzeugt durch Kombination einzelner Elemente aus Fig. 6a und 6b,
- Fig. 7: gemessene Zeitverläufe von Spannung U(t), Strom I(t) und Leistung P(t) = U(t).I(t) gemäß der erfindungsgemäßen Betriebsweise (173 hPa Xe, Pulsfrequenz: 25 kHz),
- Fig. 8: Darstellung entsprechend Figur 8, aber geänderte Zeitachse,
- Fig. 9a,b: fotografische Darstellungen erfindungsgemäßer Entladungsstrukturen,
- Fig. 10a-d: fotografische Darstellungen des Übergangs zu unerwünschten Entladungsstrukturen.

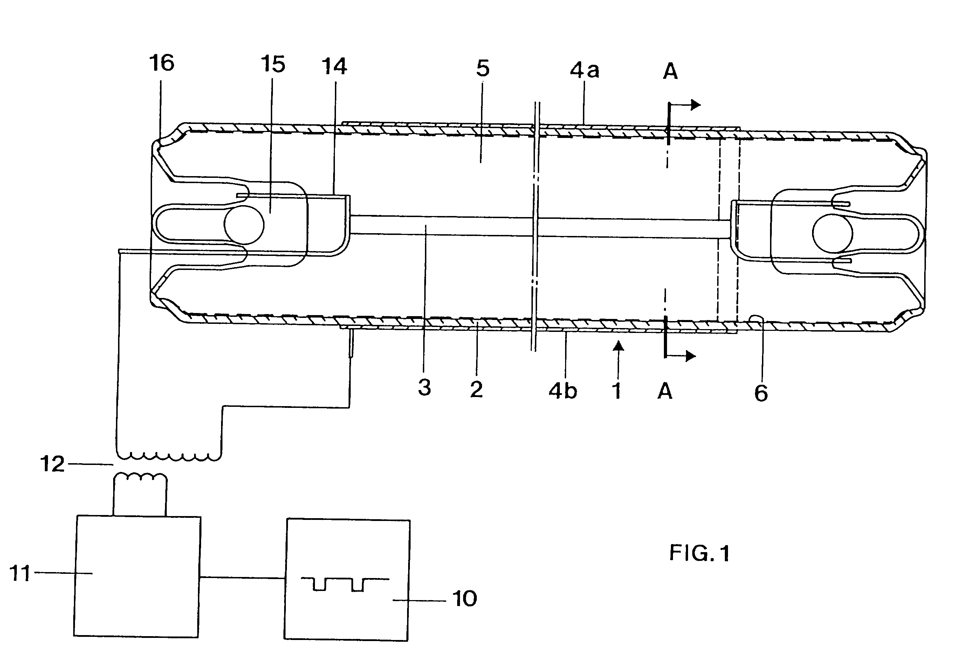

Anhand von Fig. 1 läßt sich die Erfindung in einer besonders einfachen Ausführungsform erläutern. Gezeigt ist eine Mitteldruck-Entladungslampe 1 in teilweise geschnittener Längsansicht, die mit Xenon bei einem Druck von 200 hPa gefüllt ist. Innerhalb des eine Längsachse definierenden zylindrischen Entladungsgefäßes 2 aus Glas mit einer Länge von 590 mm, einem Durchmesser von 24mm und einer Wanddicke von 0,8 mm befindet sich eine achsparallele Innenelektrode 3 in Gestalt eines Edelstahlstabs mit 2,2 mm Durchmesser. Außerhalb des Entladungsgefäßes 2 befindet sich eine Außenelektrode, die aus zwei 2 mm breiten Streifen 4a,b aus Leitsilber besteht, die achsparallel angeordnet und mit der Spannungsversorgung leitend verbunden sind. Die einzelnen Leitsilberstreifen 4a,b können, wie in vorliegendem Ausführungsbeispiel gezeigt, durch einen Metallring miteinander verbunden und gemeinsam mit der Versorgungsspannung kontaktiert sein. Dabei ist darauf zu achten, daß der Metallring ausreichend schmal geformt ist, um die Entladung nicht zu stören. In einer Variante können die Leitsilberstreifen 4a,b auch separat mit der Versorgungsspannung verbunden sein. Die Innenelektrode 3 ist mit einer bügelförmigen Stromzuführung 14 elektrisch leitend kontaktiert. Die Stromzuführung 14 ist über eine Quetschung 15 nach Außen geführt, die mittels einer Tellereinschmelzung 16 mit dem Entladungsgefäß 2 gasdicht verbunden ist.

In einer Variante dieses Ausführungsbeispiels weist das Entladungsgefäß im Bereich des Metallrings einen vergrößerten Durchmesser, z.B. in Form eines Wulstes auf. Dadurch wird das Entstehen störender parasitärer Entladungen in diesem Bereich unterbunden. In einer besonders bevorzugten Variante obiger Ausführungsform ist die stabförmige Innenelektrode nur an einem Ende mit der ersten Tellereinschmelzung starr verbunden. Das andere freie Ende ist in einer zylindrischen, zentrisch axial an der zweiten Tellereinschmelzung befestigten Hülse - ähnlich einer Spielpassung - lose geführt. Dies hat den Vorteil, daß sich die Innenelektrode bei Erwärmung, z.B. im Dauerbetrieb bei hohen elektrischen Leistungen, ungehindert in Achsrichtung ausdehnen kann. Andernfalls können unerwünschte Materialspannungen im Entladungsgefäß entstehen und/oder die Elektrode kann sich durchbiegen. Im übrigen sind die vorgenannten Merkmale dieser Varianten in ihren vorteilhaften Wirkungen nicht auf die erfindungsgemäße Betriebsweise beschränkt, sondern eignen sich prinzipiell für alle Lampen ähnlichen Typs.

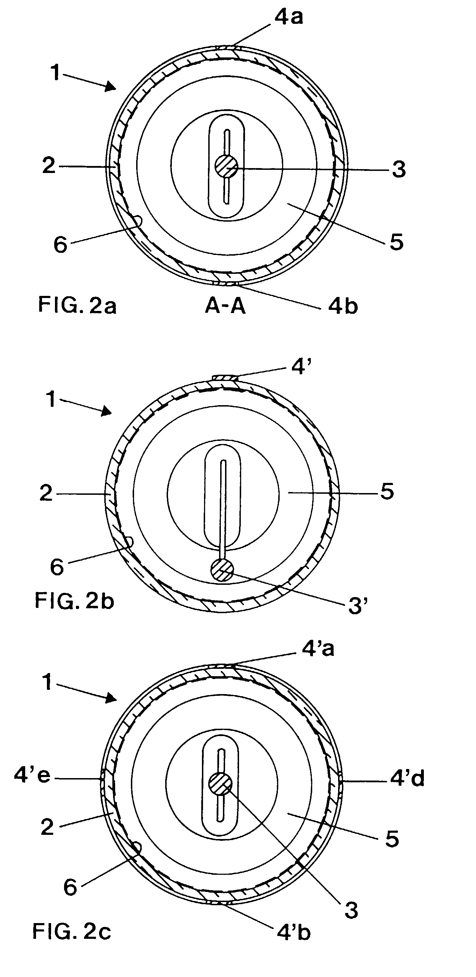

Fig. 2a zeigt den Querschnitt der Entladungslampe aus Fig. 1. Die Innenelektrode 3 ist zentrisch angeordnet, wobei auf der Außenwandung des Entladungsgefäßes 2 zwei Elektroden 4a,b, symmetrisch auf dem Umfang der Außenwandung verteilt, angeordnet sind.

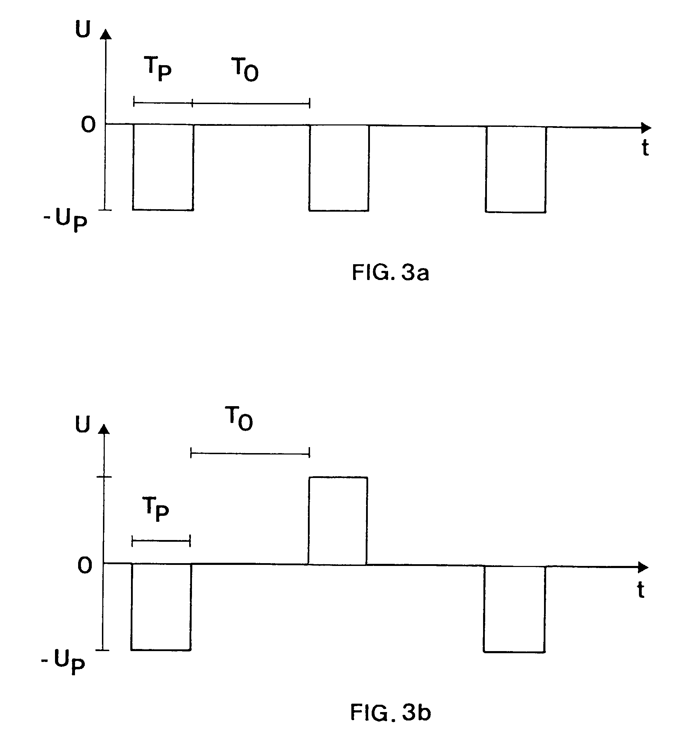

Der prinzipielle Aufbau der erforderlichen Spannungsversorgung zum erfindungsgemäßen Betrieb der Entladungslampe 1 ist ebenfalls in Fig. 1 schematisch dargestellt. Der Impulszug, d.h. die Form und Dauer der Spannungspulse und die Dauer der Totzeiten werden in einem Impulsgenerator 10 erzeugt und durch einen nachfolgenden Leistungsverstärker 11 verstärkt. Der Impulszug ist schematisch so dargestellt, wie er an der Innenelektrode 3 anliegt. Ein Hochspannungstransformator 12 transformiert das Signal des Leistungsverstärkers 11 auf die erforderliche Hochspannung. Die Lampe wird mit gepulster Gleichspannung betrieben. Es handelt sich um negative Rechteckpulse gemäß Fig. 3a. Sie besitzen folgende Parameter: Pulszeit T_{P} = 2 µs, Totzeit T₀ = 25 µs, Spannungsamplitude U_{P} während T_{P}: -3 kV und Spannungsamplitude U₀ während T₀: 0 V.

Die Innenwand des Entladungsgefäßes ist zusätzlich mit einer Leuchtstoffschicht 6 beschichtet. Die in diesem Ausführungsbeispiel von der Entladung bevorzugt emittierte UV-Strahlung wird damit in den sichtbaren Bereich des optischen Spektrums konvertiert, so daß die Lampe insbesondere für Beleuchtungszwecke geeignet ist. Es handelt sich dabei um einen Dreibandenleuchtstoff mit folgenden Komponenten: die Blaukomponente ist BaMgAl₁₀O₁₇: Eu²⁺, die Grünkomponente ist Y₂SiO₅:Tb und die Rotkomponente ist Y₂O₃:Eu³⁺. Damit wird eine Lichtausbeute von 37 lm/W erzielt. Als Farbwiedergabeeigenschaft konnte bei einer Farbtemperatur von 4000 K ein Ra > 80 erreicht werden. Die mit Hilfe des Leuchtstoffs ermittelte VUV-Ausbeute beträgt ca. 65 %. Einige weitere Füllungsbeispiele und Betriebsdaten dieser Lampe sind aus folgender Tabelle ersichtlich. Darin bezeichnen p den Gasdruck, Up den Maximalwert des Spannungspulses, up den Maximalwert des Spannungspulses bezogen auf die Schlagweite (1,2 cm) sowie den Druck und η_{VUV} bezeichnet die erzielte VUV-Ausbeute. Die eingekoppelte elektrische Leistung betrug jeweils 18 W, die Pulsdauer Tₚ (Zeitdauer zwischen Anstieg und Abfall auf jeweils 10 % des Maximalwerts) ca. 1,5 µs (bei einer Halbwertsbreite von 1 µs) und die Totzeit T₀ ca. 27 µs.

**Tabelle:**

| p(Xe) in hPa | p(Ne) in hPa | Up in kV | up in V/cm Pa | η_{VUV} in % |
|---|---|---|---|---|
| 100 | - | 2,41 | 0,200 | 55 |
| 133 | - | 2,39 | 0,150 | 60 |
| 200 | - | 2,95 | 0,123 | 65 |
| 200 | 733 | 3,50 | 0,031 | 60 |

Ein weiteres Ausführungsbeispiel zeigt Fig. 2b. Die Innenelektrode 3' ist azentrisch in der Nähe der Innenwandung und parallel zur Längsachse des zylinderförmigen Entladungsgefäßes 2 angeordnet, wobei die Außenelektrode 4' diametral gegenüberliegend auf der Außenwandung fixiert ist. Diese Anordnung ist besonders vorteilhaft bei zylinderförmigen Entladungsgefäßen mit kleinem Querschnitt, da sich einerseits die Entladung diametral innerhalb des Entladungsgefäßes erstreckt und andererseits die Außenwand nur mit einem Leitsilberstreifen als Außenelektrode bedeckt ist, d.h. die abstrahlende Fläche nicht wie in Fig. 2a durch eine zweite Außenelektrode weiter verringert wird.

In einem weiteren Ausführungsbeispiel in Fig. 2c ist wie in Fig. 2a die Innenelektrode 3 zentrisch innerhalb des Entladungsgefäßes 2 angeordnet. Symmetrisch auf dem Umfang der Außenwand des Entladungsgefäßes 2 verteilt sind vier Außenelektroden 4'a,4'b,4'd,4'e angebracht, so daß sich diese Konfiguration insbesondere für Entladungsgefäße mit großem Querschnitt und damit großer Mantelfläche eignet. Dadurch brennt die Entladung nicht nur in einer ersten Ebene wie in Fig. 2a bzw. Fig. 2b, sondern noch in einer weiteren zweiten Ebene, wodurch das Volumen des Entladungsgefäßes 2 noch besser zur Strahlungserzeugung ausgenutzt wird, als dies in den Ausführungsbeispielen von Fig. 2a und Fig. 2b der Fall ist.

In einer weiteren Ausführungsform weist die Innenwand der Stablampe aus Figur 1 statt der Leuchtstoffbeschichtung 6 eine UV- bzw. VUV-Strahlung reflektierende Beschichtung - z.B. aus MgF₂, Al₂O₃ oder CaF₂ - auf, wobei lediglich ein schmaler, bevorzugt zur Lampenachse paralleler Streifen der Innenwand unbeschichtet ist. Die Außenelektroden sind so angeordnet, daß die UV- bzw. VUV-Strahlung ungehindert durch diesen Streifen hindurch emittieren kann. Diese Ausführungsform eignet sich besonders gut zur effizienten VUV-Bestrahlung von ausgedehnten Objekten, beispielsweise zum Belichten in der Lithographie. In einer bevorzugten Variante dieser Ausführungsform ist die Innenelektrode durch eine zweite Außenelektrode ersetzt. Dadurch kann die UV- bzw. VUV-Strahlung ungehindert an der Beschichtung reflektiert und durch den streifenförmigen transparenten Bereich hindurch nach Außen emittiert werden.

In Fig. 3a ist schematisch eine für die einseitig dielektrisch behinderte Entladung erfindungsgemäß bevorzugte Pulsform der Spannung zwischen Innenelektrode (Kathode) und Außenelektrode (Anode) gezeigt. Die Spannungsform kann von der Form des Ausführungsbeispiels in Fig. 3a abweichen, solange die Spannungspulse an der Innenelektrode mit negativer Vorzeichen beginnen und durch Totzeiten getrennt sind.

In Fig. 3b ist schematisch eine Pulsform gezeigt, deren Polarität von Puls zu Puls wechselt. Sie ist nur für die zweiseitig dielektrisch behinderte Entladung geeignet, wobei der erste Puls mit beliebiger Polarität beginnen kann.

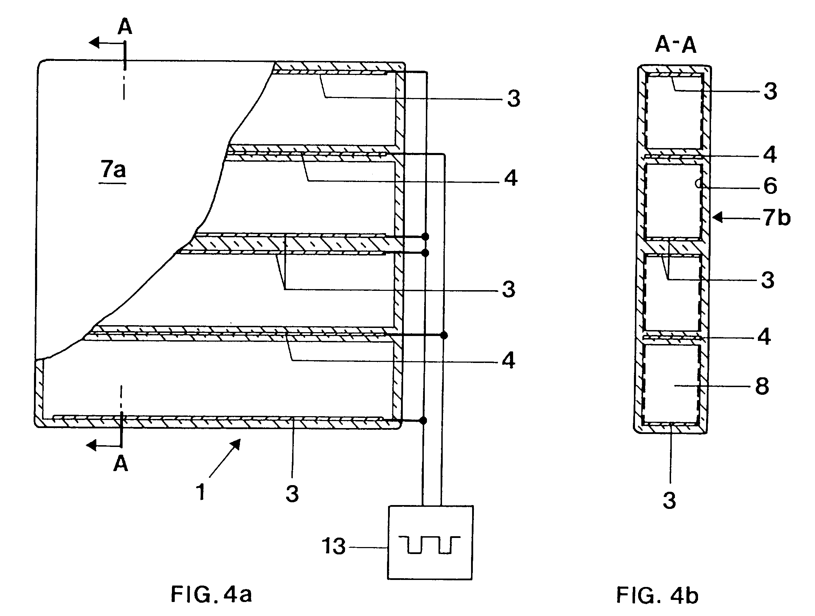

In Fig. 4a ist die Draufsicht und in Fig. 4b der Querschnitt einer weiteren Ausführungsform einer einseitig dielektrisch behinderten Entladungslampe gezeigt, die nach dem neuen Verfahren betrieben werden kann. Es handelt sich um einen Flächenstrahler, der eine obere Abstrahlfläche 7a und eine dazu parallele untere Abstrahlfläche 7b besitzt, zu der die Innenelektroden 3 und die Außenelektroden 4 senkrecht orientiert sind und abwechselnd so angeordnet sind, daß eine Vielzahl paralleler Entladungskammern 8 entstehen. Jeweils benachbarte Außen- und Innenelektroden sind durch eine dielektrische Schicht und eine gasgefüllte Entladungskammer 8, benachbarte Innenelektroden nur durch eine dielektrische Schicht getrennt. Das erfindungsgemäße Betriebsverfahren gestattet dabei die elektrische Speisung mehrerer parallel geschalteter Entladungskammern 8 mit nur einer einzigen Spannungsversorgung 13. Die Innenwand des Entladungsgefäßes ist mit einer Leuchtstoffschicht 6 beschichtet. Der Flächenstrahler ist ebenso durch Zusammenfügen von zweiseitig dielektrisch behinderten Entladungskammern realisierbar.

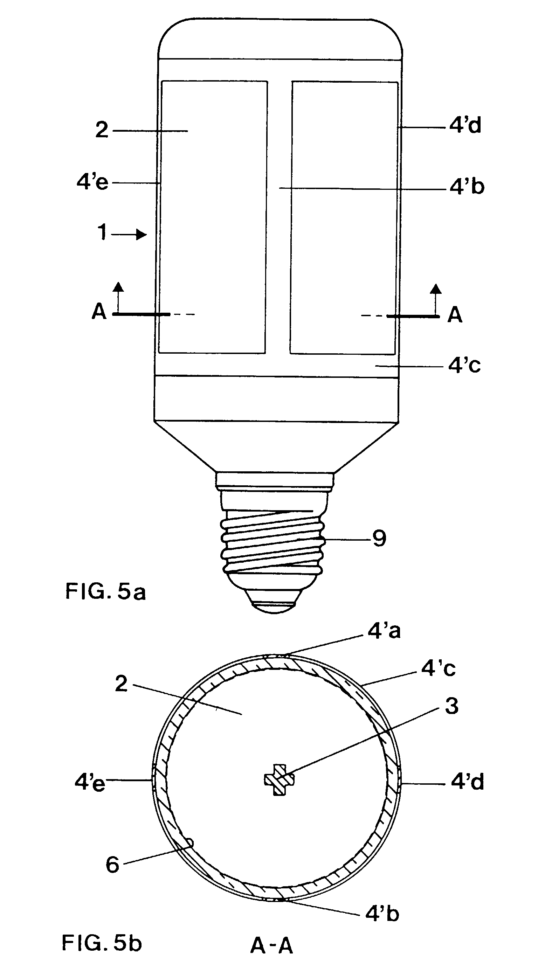

In Fig. 5a ist die Seitenansicht und in Fig. 5b der Querschnitt einer weiteren Ausführungsform einer Entladungslampe gezeigt. Sie ähnelt in ihrer äußeren Form konventionellen Lampen mit Edison-Sockel 9 und kann nach dem neuen Verfahren betrieben werden. Innerhalb des Entladungsgefäßes 2 ist eine längliche Innenelektrode 3 zentrisch angeordnet, deren Querschnitt der Form eines symmetrischen Kreuzes entspricht. Auf der Außenwandung des Entladungsgefäßes 2 sind vier Außenelektroden 4'a,4'b,4'd,4'e so angebracht, daß sie den vier Längsseiten der Innenelektrode 3 gegenüberstehen und die Entladungsstrukturen somit im wesentlichen in zwei Ebenen brennen, die senkrecht aufeinander stehen und sich in der Lampenlängsachse schneiden.

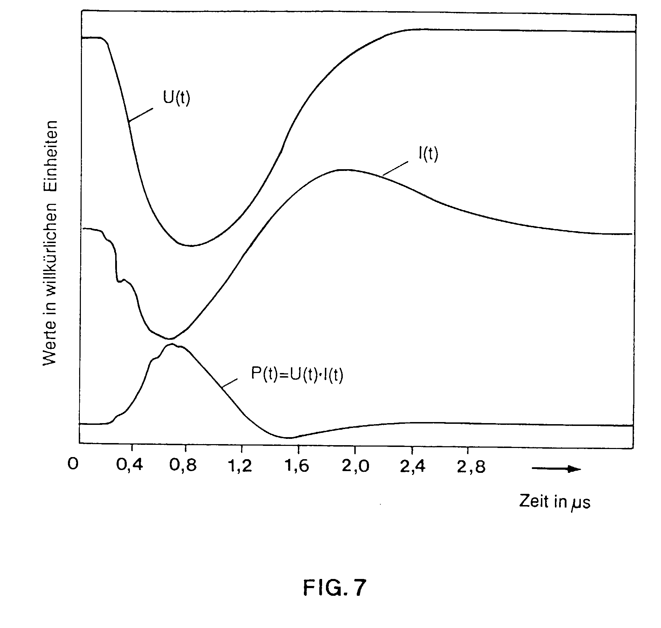

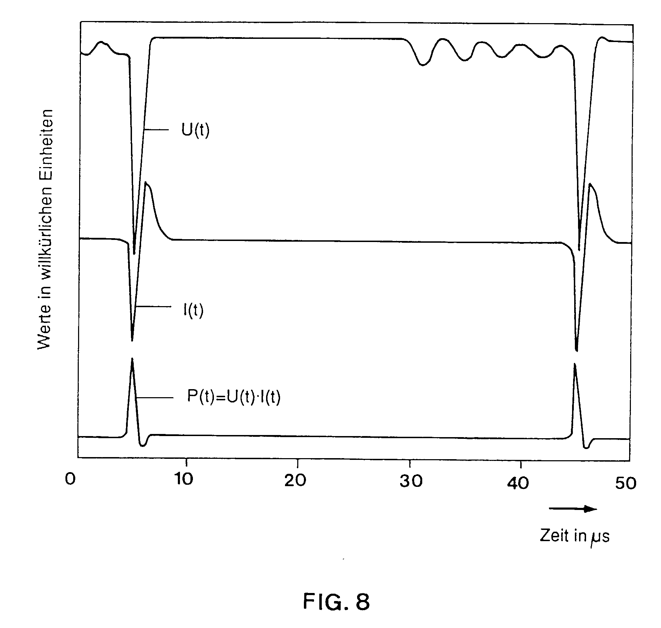

In einer weiteren bevorzugten Variante der obigen Ausführungsform besteht die Innenelektrode aus einem Edelstahlstab mit kreisförmigem Querschnitt und einem Durchmesser von 2 mm. Er ist zentrisch axial innerhalb eines kreiszylinderförmigen Entladungsgefäßes aus 0,7 mm dickem Glas angeordnet. Das Entladungsgefäß weist einen Durchmesser von ca. 50 mm und am sockelfernen Ende eine Pumpspitze auf, in der das sockelferne Ende der Innenelektrode geführt ist. Das Innere des Entladungsgefäßes ist mit Xenon bei einem Druck von 173 hPa gefüllt. Die Außenelektroden sind durch zwölf 1 mm breite und 8 cm lange Leitsilberstreifen realisiert, die achsparallel und gleichmäßig verteilt auf der Außenwand des Entladungsgefäßes angeordnet sind. Die Außenelektroden sind im Bereich des Sockels miteinander elektrisch leitend verbunden, mittels eines ringförmig auf die Außenwand angebrachten Leitsilberstreifens. Die Innenwand des Entladungsgefäßes ist mit einer Leuchtstoffschicht 6 beschichtet. Es handelt sich dabei um einen Dreibandenleuchtstoff mit der Blaukomponente BaMgAl₁₀O₁₇: Eu²⁺, der Grünkomponente LaPO₄: (Tb³⁺, Ce³⁺) und der Rotkomponente (Gd,Y)BO₃: Eu³⁺. Damit wird eine Lichtausbeute von 40 lm/W erzielt. Die Farbtemperatur beträgt 4000 K und der Farbort gemäß der Farbnormtafel nach CIE hat die Koordinaten x = 0,38 und y = 0,377. Die Zeitverläufe von Spannung U(t), Strom I(t) und Leistung P(t) = U(t)·I(t) sind aus Figur 7 und - in geändertem Zeitmaßstab - aus Figur 8 zu ersehen. Der Maximalwert der Spannung der Innenelektrode bezüglich der Außenelektroden beträgt ca. -4 kV. Die Pulsdauer (Zeitdauer bei halbem Maximalwert) und die Totzeit betragen ca. 1,2 µs bzw. ca. 37,5 µs. In Figur 8 sind außerdem vor dem zweiten Hauptpuls des Spannungsverlaufs U(t) deutlich vier Vorpulse kleinerer Amplitude erkennbar. Wie den entsprechenden Verläufen von Strom I(t) und Leistung P(t) zu entnehmen ist, fließt während dieser Vorpulse kein Strom und folglich wird auch keine elektrische Leistung in das Gas eingekoppelt. Daher sind derartige Vorpulse für die erfindungsgemäße Betriebsweise unschädlich. Bei einer Pulsfrequenz von 25kHz wird eine VUV-Ausbeute von ca. 65 % erzielt.

In einer weiteren Variante obiger Ausführungsform besteht das Entladungsgefäß aus für UV- bzw. VUV-Strahlung transparentem Material, beispielsweise SUPRASIL®-Quarzglas (Fa. Heraeus Quarzschmelze GmbH). Sie eignet sich als VUV-Strahler, z.B. in der Photochemie. In einer weiteren Variante ist die Innenelektrode mit Glas überzogen. Dies ist insbesondere bei Verwendung von aggressiven Medien, z.B. Edelgashalogeniden vorteilhaft, da auf diese Weise eine Korrosion der Innenelektrode verhindert wird.

Die Figuren 9a,b zeigen fotografische Darstellungen mit unipolaren Spannungspulsen erzeugter erfindungsgemäßer Entladungsstrukturen. Bei Figur 9a handelt es sich um eine zweiseitig dielektrisch behinderte Entladung. Ein kreiszylindrisches rohrförmiges Entladungsgefäß aus Glas ist auf seiner Außenwandung mit zwei diametral gegenüberliegenden axial angeordneten streifenförmigen Außenelektroden versehen. Innerhalb des Entladungsgefäßes und in der Verbindungsebene der beiden Außenelektroden sind die grünlichen Δ-ähnlichen Entladungsstrukturen in einer Reihe angeordnet. Die schmalen Fußpunkte der Δ-ähnlichen Entladungsstrukturen beginnen jeweils an der kathodenseitigen Innenwandung und verbreitern sich bis zur anodenseitigen Innenwandung des Entladungsgefäßes. Bei Figur 9b handelt es sich um eine einseitig dielektrisch behinderte Entladung. Die Entladungsanordnung unterscheidet sich von jener in Figur 9a lediglich durch eine zusätzliche, metallische stabförmige Innenelektrode. Sie wirkt als Kathode und ist zentrisch axial innerhalb des Entladungsgefäßes angeordnet ist. Von der Oberfläche der Innenelektrode aus verbreitern sich die einzelnen A-ähnlichen Entladungsstrukturen zu jeweils einer der beiden Außenelektroden hin. Insbesondere in Figur 9b ist deutlich zu erkennen, daß diese Strukturen im wesentlichen gleichmäßig diffus leuchten. Lediglich an ihren schmalen kathodenseitigen Endpunkten weisen sie jeweils einen prozentual sehr kleinen etwas heller leuchtenden Bereich auf. Außerdem ist die hohe Gleichförmigkeit bemerkenswert, sowohl was den Abstand der einzelnen Strukturen voneinander als auch die Gestalt und die Leuchtdichteverteilung der einzelnen Strukturen im Vergleich untereinander betrifft.

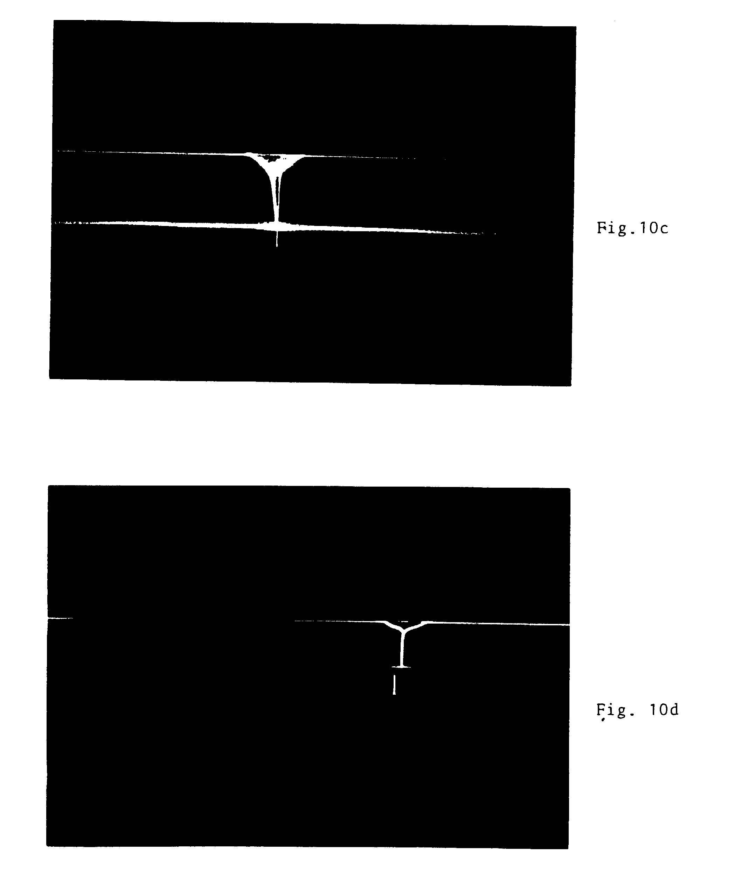

Diese Vielzahl gleichartiger Strukturen steht im augenfälligen Kontrast zu den fotografischen Darstellungen in den Figuren 10a-d. Sie zeigen in dieser Reihenfolge den allmählichen Übergang zu unerwünschten Entladungsstrukturen. In Figur 10a -die Entladungsanordnung entspricht der in Figur 9b - sind noch einige erfindungsgemäße Δ-ähnliche Entladungsstrukturen zu erkennen. Im linken unteren Bereich der Darstellung der Entladungsanordnung hat sich bereits eine Struktur ausgebildet, die einem Y ähnelt. Im oberen Bereich der Darstellung - etwas links der Bildmitte - hat sich bereits eine fadenähnliche helleuchtende Struktur auf Kosten einiger ursprünglich rechts benachbarter A-ähnlicher Entladungsstrukturen ausgebildet. Die erhöhte Leuchtdichte an der Innenwandung des Entladungsgefäßes deutet auf eine Gleitentladung in diesem Bereich hin. Der in Figur 10b gezeigte Entladungsbereich weist gegenüber Figur 10a einen nochmals verminderten UV-Wirkungsgrad auf. Die Anzahl der ursprünglich in diesem Bereich vorhandenen Strukturen hat sich weiter verringert. In den Figuren 10c und 10d handelt es sich um eine zweiseitig (die Entladungsanordnung entspricht der in Figur 9a) bzw. einseitig dielektrisch behinderte Entladung. In beiden Fällen ist nur noch eine fadenähnliche Struktur zu sehen. Im Bereich der Anode sind jeweils zwei streifenförmige Gleitentladungen auf der Innenwandung des Entladungsgefäßes zu erkennen. Diese münden Y-artig in eine helleuchtende bogenartige Struktur. Diese teilt sich auf der gegenüberliegenden kathodenseitigen Innenwandung wieder in zwei ähnliche streifenartige Gleitentladungen (Figur 10c) bzw. endet - im einseitig dielektrisch behinderten Fall - auf der Kathode.

Die Erfindung ist nicht auf die angegebenen Ausführungsbeispiele beschränkt. Insbesondere können einzelne Merkmale verschiedener Ausführungsbeispiele in geeigneter Weise miteinander kombiniert werden.

## Patentansprüche

1. Verfahren zum Betreiben einer inkohärent emittierenden Strahlungsquelle, insbesondere einer Entladungslampe (1), mittels dielektrisch behinderter Entladung, wobei ein zumindest teilweise transparentes Entladungsgefäß (2) aus elektrisch nichtleitendem Material mit einer Gasfüllung (5) gefüllt ist, wobei mindestens zwei Elektroden (3,4) in der Nähe der Gasfüllung (5) angebracht und mittels Zuleitungen mit einer elektrischen Energieversorgung (10-12) verbunden sind und wobei zwischen mindestens einer Elektrode (4) und der Gasfüllung (5) eine dielektrische Schicht angeordnet ist, dadurch gekennzeichnet, daß die elektrische Energieversorgung zwischen den Elektroden (3,4) eine Folge von Spannungspulsen liefert, wobei der einzelne Puls n durch einen Zeitverlauf der Spannung U_{Pn}(t) und Dauer T_{Pn} mit Werten in der Größenordnung von ca. 1 ns bis 50 µs charakterisiert ist und jeweils der Puls n von seinem Nachfolger n+1 durch eine Totzeit der Dauer T₀ₙ mit Werten in der Größenordnung von ca. 500 ns bis 1 ms und dem Spannungsverlauf U₀ₙ(t) getrennt ist, wobei während der Dauern T_{Pn} die Spannungsverläufe U_{Pn}(t) so gewählt werden, daß während T_{Pn} in die Gasfüllung (5) vornehmlich elektrische Wirkleistung eingekoppelt wird, wohingegen während der Totzeiten T₀ₙ die Spannungsverläufe U₀ₙ(t) so gewählt werden, daß die Gasfüllung (5) in einen Zustand zurückkehren kann, der dem Zustand vor dem jeweils vorherigen Spannungspuls U_{Pn}(t) ähnelt, wobei die Größen U_{Pn}(t), T_{Pn}, U₀ₙ(t), T₀ₙ so aufeinander abgestimmt sind, daß zwischen den Elektroden (3,4) Entladungsstrukturen vergleichsweise niedriger Stromdichten entstehen.

2. Verfahren nach Anspruch 1, dadurch gekennzeichnet, daß die Spannungsverläufe U_{Pn}(t) unipolar sind und daß die Entladung im unipolaren Fall einzelne Δ-ähnliche Entladungsstrukturen ausbildet und sich bei wechselnder Polarität einer zweiseitig dielektrisch behinderten Entladung dementsprechend jeweils eine spiegelbildliche Überlagerung zweier derartiger Entladungsstrukturen ergibt, die einem 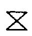 ähnelt, wobei sich die Abstände dieser einzelnen Entladungsstrukturen auch derartig verringern können, daß im Grenzfall die gesamte Entladungsebene in einer Art "Vorhang"-ähnlicher Struktur abstrahlt.

3. Verfahren nach einem oder mehreren der vorstehenden Ansprüche, dadurch gekennzeichnet, daß die Dauern T₀ₙ so gewählt werden, daß der zeitliche Mittelwert des Volumens einer einzelnen Entladungsstruktur maximal wird.

4. Verfahren nach einem oder mehreren der vorstehenden Ansprüche, dadurch gekennzeichnet, daß während der Dauern T_{Pn} für die Spannungsverläufe U_{Pn}(t) zwischen den Elektroden (3,4) Werte gewählt werden, die auf die Wiederzündspannung der Entladung abgestimmt sind.

5. Verfahren nach Anspruch 4, dadurch gekennzeichnet, daß die Spannungsverläufe U_{Pn}(t) und U₀ₙ(t) sowie die Dauern T_{Pn} und T₀ₙ auf den Fülldruck, die Art der Füllung, die Schlagweite, die Dielektrika und die Elektrodenkonfiguration abgestimmt sind.

6. Verfahren nach Anspruch 5, dadurch gekennzeichnet, daß die Spannungsverläufe U_{Pn}(t) aus einer oder mehrerer der folgenden Grundformen direkt oder näherungsweise zusammengesetzt sind: dreieckförmig, rechteckförmig, trapezförmig, stufenförmig, bogenförmig, parabelförmig, sinusförmig.

7. Verfahren nach Anspruch 6, dadurch gekennzeichnet, daß während der Dauern T_{Pn} Maximalwerte für die Spannungspulse U_{Pn}(t) zwischen den Elektroden (3,4) gewählt werden, die mindestens der Wiederzündspannung entsprechen, zuzüglich dem durch das Dielektrikum verursachten Spannungsabfall.

8. Verfahren nach Anspruch 7, dadurch gekennzeichnet, daß die Maximalwerte der Spannungspulse im Bereich zwischen 0,01 und 2 V pro cm Schlagweite und Pascal Fülldruck liegt.

9. Verfahren nach einem oder mehreren der vorstehenden Ansprüche, dadurch gekennzeichnet, daß die Ausbildung von Entladungsstrukturen vergleichsweise niedriger Stromdichten unterstützt wird durch ausreichende Dicken der dielektrischen Schichten und geeignet niedrige relative Dielektrizitätskonstanten.

10. Verfahren nach Anspruch 1, dadurch gekennzeichnet, daß der Spannungsverlauf periodisch ist.

11. Verfahren nach Anspruch 1, dadurch gekennzeichnet, daß zumindest bei einer Elektrode die dielektrische Schicht durch die Wand des Entladungsgefäßes (2) gebildet ist.

12. Verfahren nach Anspruch 1, dadurch gekennzeichnet, daß das Verhältnis der mit dem Dielektrikum in Kontakt stehenden Elektrodenfläche zum Umfang dieser Elektrodenfläche möglichst klein ist.

13. Verfahren nach Anspruch 1, dadurch gekennzeichnet, daß im Falle der einseitig dielektrisch behinderten Entladung die Spannungsverläufe U_{Pn}(t) der dielektrisch unbehinderten Elektrode(n) (3) gemessen gegen die dielektrisch behinderte(n) (4) während der Leistungseinkopplung mit negativen Werten beginnen - abgesehen von eventuellen positiven, in Hinblick auf die Wirkleistungseinkopplung unbedeutenden Spannungsspitzen.

14. Verfahren nach Anspruch 1, dadurch gekennzeichnet, daß im Falle der einseitig dielektrisch behinderten Entladung die Spannungsamplituden U_{Pn}(t) der dielektrisch unbehinderten Elektrode(n) (3) gemessen gegen die dielektrisch behinderte(n) (4) während der Leistungseinkopplung ausschließlich negativ sind - abgesehen von eventuellen positiven, in Hinblick auf die Wirkleistungseinkopplung unbedeutenden Spannungsspitzen.

15. Verfahren nach Anspruch 1, dadurch gekennzeichnet, daß im Falle der Verwendung mehrerer dielektrisch behinderter Elektroden zwischen zweiseitig dielektrisch behinderten Elektroden unipolare oder bipolare Spannungspulse oder Spannungspulse mit wechselnder Polarität angelegt sind.

16. Verfahren nach Anspruch 1, dadurch gekennzeichnet, daß im Falle der Verwendung mehrerer dielektrisch behinderter Elektroden zwischen zweiseitig dielektrisch behinderten Elektroden bipolare Spannungspulse angelegt sind.

17. Verfahren nach einem oder mehreren der vorherigen Ansprüche, dadurch gekennzeichnet, daß im Falle der Verwendung einer oder mehrerer im Entladungsgefäß (2) angeordneter, insbesondere stabförmiger oder streifenförmiger Elektroden, diese zentrisch oder azentrisch angeordnet sind, wobei eine oder mehrere der Elektroden dielektrisch ummantelt sein können.

18. Verfahren nach einem oder mehreren der vorherigen Ansprüche, insbesondere der Ansprüche 1 oder 12 oder 17, dadurch gekennzeichnet, daß im Falle der Verwendung einer oder mehrerer außerhalb des Entladungsgefäßes angeordneter Elektroden diese streifenförmig ausgebildet sind.

19. Verfahren nach Anspruch 1, dadurch gekennzeichnet, daß das Entladungsgefäß (2) aus einem Rohr besteht, in dessen Längsachse eine Innenelektrode (3) angeordnet ist und auf dessen Außenwandung mindestens eine Außenelektrode (4) angebracht ist.

20. Verfahren nach Anspruch 1, dadurch gekennzeichnet, daß das Entladungsgefäß (2) eine flächige quaderförmige Struktur hat, die durch Seitenflächen und zwei Deckflächen (7a,7b) begrenzt wird, durch welche die Abstrahlung im wesentlichen erfolgt, wobei senkrecht zu den Deckflächen Innen- und Außenelektroden (3) bzw. (4) so angeordnet sind, daß eine Vielzahl paralleler Entladungskammern (8) entsteht, die in einer Ebene angeordnet sind, die parallel zur Abstrahlebene, d.h. den Deckflächen (7a,7b) der flächigen quaderförmigen Struktur ist, wobei die jeweils benachbarten Elektroden(3,4) mit unterschiedlichem elektrischen Potential durch eine gasgefüllte Entladungskammer (8) und eine dielektrische Schicht getrennt sind.

21. Verfahren nach Anspruch 20, dadurch gekennzeichnet, daß die Elektroden durch dielektrische Schichten vom gasgefüllten Entladungsraum getrennt sind.

22. Verfahren nach Anspruch 1, dadurch gekennzeichnet, daß das Entladungsgefäß im wesentlichen zylinderförmig ist und an einem Ende mit einem Sockel (9) versehen ist, wobei sich innerhalb des Entladungsgefäßes eine, vorzugsweise einseitig fixierte, zentrische stabförmige Innenelektrode (3) befindet und auf der Außenwandung des Entladungsgefäßes mindestens eine streifenförmige Elektrode (4'a,4'b,4'd,4'e) angeordnet ist.

23. Verfahren nach einem oder mehreren der vorherigen Ansprüche, dadurch gekennzeichnet, daß der Betriebsdruck der Gasfüllung (5) im Bereich zwischen 100 Pa und 3 MPa beträgt, insbesondere mehr als ca. 1kPa.

## Claims

1. Method for operating an incoherently emitting radiation source, especially a discharge lamp (1), by means of dielectrically inhibited discharge, in which an at least partially transparent discharge vessel (2) of electrically nonconductive material is filled with a gas filling (5), in which at least two electrodes (3, 4) are fitted in the vicinity of the gas filling (5) and are connected by means of supply lines to an electrical power supply (10-12) and in which a dielectric layer is disposed between at least one electrode (4) and the gas filling (5), characterized in that the electrical power supply delivers a succession of voltage pulses between the electrodes (3, 4), the individual pulse n being characterized by a temporal progression of the voltage U_{Pn}(t) and duration T_{Pn} with values of the order of magnitude of approximately 1 ns to 50 µs and in each instance the pulse n being separated from its successor n+1 by a dead time of the duration T_{On} with values of the order of magnitude of approximately 500 ns to 1 ms and the voltage progression U_{On}(t), during the durations T_{Pn} the voltage progressions U_{Pn}(t) being selected so that during T_{Pn} predominantly electrical real power is coupled into the gas filling (5), whilst during the dead times T_{On} the voltage progressions U_{On}(t) are selected so that the gas filling (5) can return to a condition which resembles the condition prior to the respectively foregoing voltage pulse U_{Pn}(t), the quantities U_{Pn}(t), T_{Pn}, U_{On}(t) and T_{On} being coordinated with one another so that discharge structures of relatively low current densities arise between the electrodes (3, 4).

2. Method according to Claim 1, characterized in that the voltage progressions U_{Pn}(t) are unipolar, and in that the discharge in the unipolar case develops individual Δ-like discharge structures and in the case of alternating polarity of a bilaterally dielectrically inhibited discharge correspondingly in each instance a mirror-image superposition of two such discharge structures results, which resembles a 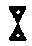 , it also being possible for the spacings of these individual discharge structures to decrease in such a manner that in the limiting case the entire discharge plane emits in a type of "curtain"-like structure.

3. Method according to one or more of the preceding claims, characterized in that the durations T_{On} are selected so that the temporal mean value of the volume of an individual discharge structure becomes a maximum. Method

4. Method according to one or more of the preceding claims, characterized in that during the durations T_{Pn} for the voltage progressions U_{Pn}(t) between the electrodes (3, 4) values are selected which are coordinated with the reignition voltage of the discharge.

5. Method according to Claim 4, characterized in that the voltage progressions U_{Pn}(t) and U_{On}(t) and the durations T_{Pn} and T_{On} are coordinated with the filling pressure, the type of filling, the striking distance, the dielectrics and the electrode configuration.

6. Method according to Claim 5, characterized in that the voltage progressions U_{Pn}(t) are composed, directly or approximately, of one or more of the following basic forms: triangular, rectangular, trapezoidal, stepped, arcuate, parabolic, sinusoidal.

7. Method according to Claim 6, characterized in that during the durations T_{Pn} maximum values for the voltage pulses U_{Pn}(t) between the electrodes (3, 4) are selected which at least correspond to the reignition voltage plus the voltage drop caused by the dielectric.

8. Method according to Claim 7, characterized in that maximum values of the voltage pulses are in the range between 0.01 and 2 V per cm striking distance and per Pascal filling pressure.

9. Method according to one or more of the preceding claims, characterized in that the development of discharge structures of relatively low current densities is assisted by sufficient thicknesses of the dielectric layers and appropriately low relative dielectric constants.

10. Method according to Claim 1, characterized in that the voltage progression is periodic.

11. Method according to Claim 1, characterized in that at least in the case of one electrode the dielectric layer is formed by the wall of the discharge vessel (2).

12. Method according to Claim 1, characterized in that the ratio of the electrode area which is in contact with the dielectric to the periphery of this electrode area is as small as possible.

13. Method according to Claim 1, characterized in that in the case of the unilaterally dielectrically inhibited discharge the voltage progressions U_{Pn}(t) of the dielectrically uninhibited electrode(s) (3), measured against the dielectrically inhibited one(s) (4), begin during the injection of power with negative values - apart from any possible positive voltage peaks which are insignificant with respect to the injection of real power.

14. Method according to Claim 1, characterized in that in the case of the unilaterally dielectrically inhibited discharge the voltage amplitudes U_{Pn}(t) of the dielectrically uninhibited electrode(s) (3), measured against the dielectrically inhibited one(s) (4), are exclusively negative during the injection of power - apart from any possible positive voltage peaks which are insignificant with respect to the injection of real power.

15. Method according to Claim 1, characterized in that in the case of the use of a plurality of dielectrically inhibited electrodes unipolar or bipolar voltage pulses or voltage pulses of alternating polarity are applied between bilaterally dielectrically inhibited electrodes.

16. Method according to Claim 1, characterized in that in the case of the use of a plurality of dielectrically inhibited electrodes bipolar voltage pulses are applied between bilaterally dielectrically inhibited electrodes.

17. Method according to one or more of the preceding claims, characterized in that in the case of the use of one or more in particular bar-shaped or strip-shaped electrodes which are disposed in the discharge vessel (2), these are disposed centrally or non-centrally, it being possible for one or more of the electrodes to be jacketed with dielectric.

18. Method according to one or more of the preceding claims, especially Claim 1 or 12 or 17, characterized in that in the case of the use of one or more electrodes disposed outside the discharge vessel, these are designed to be strip-shaped.

19. Method according to Claim 1, characterized in that the discharge vessel (2) comprises a tube, in the longitudinal axis of which an inner electrode (3) is disposed and on the outer wall of which at least one outer electrode (4) is fitted.

20. Method according to Claim 1, characterized in that in that the discharge vessel (2) has a flat parallelepiped structure which is bounded by lateral surfaces and two covering surfaces (7a, 7b), through which the radiative emission essentially takes place, inner and outer electrodes (3) and (4) respectively being disposed perpendicular to the covering surfaces so that a multiplicity of parallel discharge chambers (8) is created, which chambers are disposed in a plane which is parallel to the radiative emission plane, i.e. the covering surfaces (7a, 7b) of the flat parallelepiped structure, the respectively adjacent electrodes (3, 4) at differing electrical potential being separated by a gas-filled discharge chamber (8) and a dielectric layer.

21. Method according to Claim 20, characterized in that the electrodes are separated from the gas-filled discharge space by dielectric layers.

22. Method according to Claim 1, characterized in that the discharge vessel is substantially cylindrical and is provided, at one end, with a base (9), a central bar-shaped inner electrode (3), which is preferably fixed on one side, being situated within the discharge vessel and at least one strip-shaped electrode (4'a, 4'b, 4'd, 4'e) being disposed on the outer wall of the discharge vessel.

23. Method according to one or more of the preceding claims, characterized in that the operating pressure of the gas filling (5) is in the range between 100 Pa and 3 MPa, especially more than approximately 1 kPa.

## Revendications

1. Procédé pour faire fonctionner une source de rayonnement à émission non cohérente, notamment une lampe à décharge (1), au moyen d'une décharge rendue incompléte par voie diélectrique, une enceinte de décharge (2) au moins partiellement transparente et en matériau électriquement non conducteur étant emplie d'une atmosphère (5) gazeuse, au moins deux électrodes (3, 4) étant disposées à proximité de l'atmosphère (5) gazeuse et reliées à une alimentation (10 à 12) en énergie électrique au moyen de lignes d'alimentation, et une couche diélectrique étant disposée entre au moins une électrode (4) et l'atmosphère (5) gazeuse, caractérisé par le fait que l'alimentation en énergie électrique entre les électrodes (3, 4) fournit un train d'impulsions de tension, l'impulsion individuelle n étant caractérisée par une courbe dans le temps de la tension U_{Pn}(t) et de la durée T_{Pn} ayant des valeurs de l'ordre de grandeur d'environ 1 ns à 50 µs, et chaque impulsion n étant séparée de la suivante n + 1 par un temps mort de durée TOn ayant des valeurs de l'ordre de grandeur d'environ 500 ns à 1 ms et de la courbe de tension U_{On}(t), les courbes de tension U_{Pn}(t) étant choisies pendant les durées T_{Pn} de telle sorte qu'au cours de T_{Pn}, il est principalement injecté de la puissance électrique effective dans l'atmosphère (5) gazeuse, alors que pendant les temps morts T_{On} les courbes de tension U_{On}(t) sont choisies de telle sorte que l'atmosphère (5) gazeuse puisse revenir à un état qui est analogue à l'état ayant existé avant l'impulsion de tension U_{Pn}(t) précédente, les grandeurs U_{Pn}(t), T_{Pn}, U_{On}(t), T_{On} étant synchronisés entre elles de telle sorte que des structures de décharge de densités de courant relativement faibles sont engendrées entre les électrodes (3, 4).

2. Procédé selon la revendication 1, caractérisé par le fait que les courbes de tension U_{Pn}(t) sont unipolaires, que dans le cas unipolaire la décharge forme des structures de décharge individuelles analogues à un Δ, et que lors d'une alternance de polarité d'une décharge rendue incomplète par voie diélectrique des deux côtés, on obtient par conséquent une superposition symétrique comme en un miroir, analogue à un X, de deux structures de décharge de ce genre, les intervalles entre ces structures de décharge pouvant également se réduire de telle sorte que, dans le cas limite, l'ensemble du plan de décharge émette suivant une structure analogue à une sorte de "rideau".

3. Procédé selon l'une quelconque ou plusieurs des revendications précédentes, caractérisé par le fait que les durées TOn sont choisies de telle sorte que la valeur moyenne dans le temps du volume d'une structure de décharge individuelle devienne maximale.

4. Procédé selon l'une quelconque ou plusieurs des revendications précédentes, caractérisé par le fait que, pendant les durées T_{Pn}, on choisit, pour les courbes de tension U_{Pn}(t) entre les électrodes (3, 4), des valeurs qui sont adaptées à la tension de réamorçage de la décharge.

5. Procédé selon la revendication 4, caractérisé par le fait que les courbes de tension U_{Pn}(t) et U_{On}(t), ainsi que les durées T_{Pn} et T_{On}, sont adaptées à la pression de l'atmosphère, au type de l'atmosphère, à la distance de décharge, au diélectrique et à la configuration des électrodes.

6. Procédé selon la revendication 5, caractérisé par le fait que les courbes de tension U_{Pn}(t) sont constituées directement ou approximativement de l'une ou de plusieurs des formes de base suivantes : triangulaire, rectangulaire, trapézoïdale, à gradins, en forme d'arc, parabolique, sinusoïdale.

7. Procédé selon la revendication 6, caractérisé par le fait que, pendant les durées T_{Pn}, on choisit pour les impulsions de tension U_{Pn}(t) entre les électrodes (3, 4) des valeurs maximales qui correspondent au moins à la tension de réamorçage, majorées de la chute de tension provoquée par le diélectrique.

8. Procédé selon la revendication 7, caractérisé par le fait que les valeurs maximales des impulsions de tension se situent dans la plage comprise entre 0,01 et 2 V par cm de distance de décharge et par Pascal de pression de l'atmosphère.

9. Procédé selon l'une quelconque ou plusieurs des revendications précédentes, caractérisé par le fait que la formation de structures de décharge de densités de courant relativement faibles est favorisée par des épaisseurs suffisantes des couches diélectriques, et par des constantes diélectriques appropriées relativement faibles.

10. Procédé selon la revendication 1, caractérisé par le fait que la courbe de tension est périodique.

11. Procédé selon la revendication 1, caractérisé par le fait que la couche diélectrique d'au moins une électrode est formée par la paroi de l'enceinte de décharge (2).

12. Procédé selon la revendication 1, caractérisé par le fait que la proportion de la surface d'électrode qui est en contact avec le diélectrique est aussi petite que possible par rapport à l'étendue de cette surface d'électrode.

13. Procédé selon la revendication 1, caractérisé par le fait que, dans le cas de la décharge rendue incomplète par voie diélectrique d'un seul côté, les courbes de tension U_{Pn}(t) de(s) électrode(s) (3) non entravée (s) diélectriquement mesurées par rapport à(aux) électrode(s) (4) entravée (s) diélectriquement commencent, pendant le l'injection de la puissance par des valeurs négatives, et ce indépendamment d'éventuelles pointes de tension positives qui sont insignifiantes en vue de l'injection de la puissance effective.

14. Procédé selon la revendication 1, caractérisé par le fait que, dans le cas de la décharge rendue incomplète par voie diélectrique d'un seul côté, les amplitudes de tension Upn(t) de (s) électrode(s) (3) non entravée(s) diélectriquement mesurées par rapport à(aux) électrode(s) (4) entravée(s) diélectriquement, sont pendant l'injection de la puissance exclusivement négatives, et ce indépendamment d'éventuelles pointes de tension positives qui sont insignifiantes en vue de l'injection de la puissance effective.

15. Procédé selon la revendication 1, caractérisé par le fait que, dans le cas de l'utilisation de plusieurs électrodes entravées diélectriquement entre des électrodes entravées diélectriquement des deux côtés, on applique des impulsions de tension unipolaires ou bipolaires, ou des impulsions de tension de polarité alternée.

16. Procédé selon la revendication 1, caractérisé par le fait que, dans le cas de l'utilisation de plusieurs électrodes entravées diélectriquement entre des électrodes entravées diélectriquement des deux côtés, on applique des impulsions de tension bipolaires.

17. Procédé selon l'une quelconque ou plusieurs des revendications précédentes, caractérisé par le fait que, dans le cas de l'utilisation d'une ou de plusieurs électrodes disposées dans l'enceinte de décharge (2), notamment d'électrodes en forme de barre ou de bande, celles-ci sont disposées de façon centrée ou excentrée, une ou plusieurs électrodes pouvant être diélectriquement enrobées.

18. Procédé selon l'une quelconque ou plusieurs des revendications précédentes, en particulier selon les revendications 1 ou 12 ou 17, caractérisé par le fait que, dans le cas de l'utilisation d'une ou de plusieurs électrodes disposées en dehors de l'enceinte de décharge, celles-ci sont réalisées en forme de bande.

19. Procédé selon la revendication 1, caractérisé par le fait que l'enceinte de décharge (2) est constituée d'un tube dans l'axe longitudinal duquel est disposée une électrode intérieure (3), et sur la paroi extérieure duquel est fixée au moins une électrode extérieure (4).

20. Procédé selon la revendication 1, caractérisé par le fait que l'enceinte de décharge (2) présente une structure parallélépipédique de grande surface, qui est délimitée par des surfaces latérales et par deux surfaces de recouvrement (7a, 7b), à travers lesquelles l'émission est essentiellement assurée, des électrodes intérieures et extérieures (3) ou (4) étant disposées perpendiculairement aux surfaces de recouvrement de manière à obtenir une pluralité de chambres de décharge (8) parallèles, qui sont disposées dans un plan qui est parallèle au plan d'émission, à savoir aux surfaces de recouvrement (7a, 7b) de la structure parallélépipédique de grande surface, les électrodes (3, 4) respectivement voisines à différents potentiels électriques étant séparées par une chambre de décharge (8) remplie de gaz et par une couche diélectrique.

21. Procédé selon la revendication 20, caractérisé par le fait que les électrodes sont séparées de la chambre de décharge remplie de gaz par des couches diélectriques.

22. Procédé selon la revendication 1, caractérisé par le fait que l'enceinte de décharge est sensiblement cylindrique et comporte un culot (9) sur l'une de ses extrémités, une électrode intérieure (3) en forme de barre, qui est de préférence fixée de façon centrée sur un côté, se trouvant à l'intérieur de l'enceinte de décharge, et au moins une électrode en forme de bande (4'a, 4'b, 4'd, 4'e) étant disposée sur la paroi extérieure de l'enceinte de décharge.

23. Procédé selon l'une quelconque ou plusieurs des revendications précédentes, caractérisé par le fait que la pression de fonctionnement de l'atmosphère (5) gazeuse se situe dans la plage comprise de 100 Pa et 3 MPa, et est notamment supérieure à environ 1kPa.
